# EUROPEAN PATENT SPECIFICATION

(11) **EP 2 365 921 B1**
(45) Date of publication and mention of the grant of the patent: **24.04.2013**
(21) Application number: 08875946.9
(22) Date of filing: 19.11.2008
(51) Int. Cl.: B60R 21/268, B60R 21/26

(54) **INFLATOR WITH MEANS FOR INCREASING THE OUTPUT FLOW OF PRESSURIZED GAS**
GASGENERATOR MIT MITTELN ZUR ERHÖHUNG DER AUSGANGSSTRÖMUNG DES DRUCKGASSES
GONFLEUR EQUIPE DE MOYENS POUR AUGMENTER L'ECOULEMENT DE SORTIE D'UN GAZ SOUS PRESSION

(43) Date of publication of application: 21.09.2011
(73) Proprietor: Autoliv Development AB, 447 83 Vårgårda (SE)
(72) Inventor: JOHANSON, Mats, 513 93 Fristad (SE); COSTECALDE, Laurent, 29000 Quimper (FR); CHEVALIER, Mael, 29217 Plougonvelin (FR)
(74) Representative: Regimbeau
(86) International application number: PCT/IB2008/055649
(87) International publication number: WO 2010/058251

(56) References cited:
- DE-U1-202004 019 448
- GB-A- 2 291 495
- ANONYMOUS: "Air bag inflator having a variable area gas exit orifice" RESEARCH DISCLOSURE, MASON PUBLICATIONS, HAMPSHIRE, GB, vol. 391, no. 26, 1 November 1996 (1996-11-01), XP007121391 ISSN: 0374-4353
- ANONYMOUS: "Controllable orifice for a stored gas inflator" RESEARCH DISCLOSURE, MASON PUBLICATIONS, HAMPSHIRE, GB, vol. 392, no. 41, 1 December 1996 (1996-12-01), XP007121454 ISSN: 0374-4353

## Description

The present invention relates to an inflator for an air-bag, which comprises at least one pressure vessel containing a pressurised gas, mounted on a housing which receives gas from said vessel and direct it to the air-bag to be inflated, via an aperture formed in a wall of said vessel, this aperture being closed by a foil fixed on the wall, at the outside of the vessel, which breaks when a predetermined pressure is reached in said housing.

An inflator of this type is disclosed in US-A-6,672,616. The document "Air bag inflator having a variable area gas exit orifice" Research disclosure, Mason Publications, Hampshire, GB, vol. 391, no.26, describes an inflator according to the preamble of claim 1.

In this inflator, an ignitor mounted on a holder generates hot gases to move an actuating element in a predetermined direction, the actuating element having a conical face which acts on inclined faces of two opening elements which are thus moved apart to rupture the foil of each pressure vessel, to permit gas to flow into the air-bag.

Such an inflator creates difficulties related to the module functioning, due to a too high onset.

A flow control nozzle is welded inside the pressure vessel.

Nevertheless, if the flow output is too high, air-bag containers and covers are over stressed during the first milliseconds of the inflator functioning.

If the output flow is too low, the opening is delayed and functioning time, together with restrains functions can not be reached.

Thus, aggressiveness reduction, i.e. the restriction of the output flow during the first milliseconds, must be improved, in order to deal with a compromise between a huge and a low output gas flow.

The present invention proposes an improved inflator which reaches this goal.

According to a feature of the invention, said vessel contains means for increasing the output flow of pressurized gas through said aperture while the delta pressure between the inside of said vessel and said housing decreases.

Thanks to this feature, the aggressiveness level of this gas storage inflator is reduced. According to the invention, the inflator comprises means which
- include a membrane which faces said aperture, and which can move under a variation of said delta pressure, so as to move between a first position in which it extends far from said aperture and a second position in which it extends in the vicinity of said aperture, and vice versa;

Other advantageous and non-limiting characteristics of the invention, taken alone or in combination, are as follows:
- the inside space of said vessel presents at least two orifices, the circulation of the gas from said vessel to said aperture being possible through these openings when the membrane is in said first position, and through one of them when the membrane in said second position;
- said membrane is a deformable membrane;
- said membrane is an elastic membrane;
- said membrane is a non or low deformable membrane mounted on an deformable support;
- said membrane is fixed at the top of a closed wall which surrounds said aperture;
- said wall is integral with said vessel;
- said closed wall is a part of a nozzle fixed to said vessel and surrounding said aperture;
- said nozzle comprises a partition surrounded by said wall, which separates the nozzle in two chambers, i.e. a first chamber between said membrane and said partition, and a second chamber between said partition and said aperture, and said partition includes an opening that faces said aperture;
- said partition includes an additional wall which surrounds said opening, whose height is less than the height of said wall, and acts as a seat for the membrane when in the second position;
- said at least two orifices are present in said membrane, one of them facing said aperture, and the second offset from said aperture, and the total surface of said orifices is smaller or equal to the surface of said aperture;
- one of said at least two orifices is present in said membrane, facing said aperture, and the second one of said at least two orifices is a hole in the wall of said nozzle, in register with said first chamber;
- one of said at least two orifices is present in said membrane, offset from said aperture, and the second one of said at least two orifices is a hole in the wall of said nozzle, in register with said second chamber;
- said membrane is free of orifices, and said first and second of said at least two orifices are holes in the wall of said nozzle, one in register with said first chamber, and the other in register with said second chamber.

Several embodiments of the invention will be now described, by way of example, with reference to the accompanying drawings in which:
- figures 1 and 2 are diagrammatic sectional views of a inflator in accordance with the state of the art, which can be equipped with the means of the present invention;
- figure 3 is an enlarged view of a part of the inflator of figure 1;
- figure 4 is an enlarged view of a part of a first embodiment of an inflator according to the present invention;
- figures 5 and 6 are quite similar to figure 4 and illustrate the flow of gas in two different situations;
- figure 7 is an enlarged view of a part of a second embodiment of an inflator according to the present invention;
- figures 8 and 9 are enlarged views of a part of a third embodiment of an inflator according to the present invention, showing two positions of a membrane;
- figure 10 is a diagrammatic sectional view of a part of an inflator in accordance with a fourth embodiment of this invention;
- figure 11 is an enlarged view of a part of a fifth embodiment of an inflator according to the present invention;
- figures 12 and 13 are quite similar to figure 11 and illustrate the flow of gas in two different situations;
- figures 14A and 14B, 15A and 15B, 16A and 16B are, respectively, diagrammatic sectional views of sixth, seventh and eighth embodiments of the invention, showing two positions of a membrane and their consequence relating to the flow of gas.

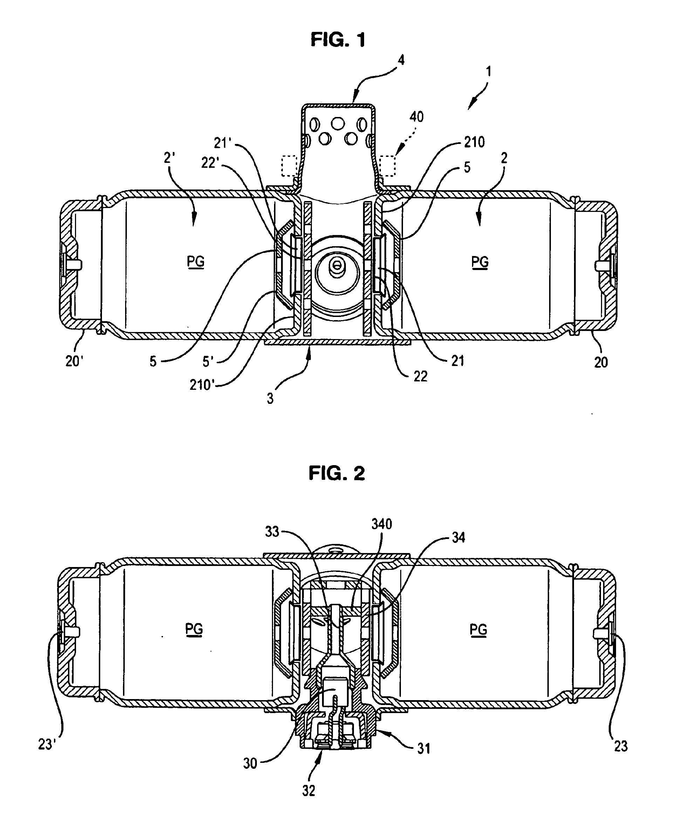

The inflator 1 shown on figures 1 and 2 has a known structure. It comprises a central housing 3 which is provided with an electronically activated igniter 30 mounted on a holder 31 and equipped with a shunt ring 32.

In the chamber delimited by this housing, and more precisely on the igniter, is mounted a piston 33. Its function will be explained thereafter.

The housing 3 communicates with a diffuser 4 which can be equipped with a sealing ring 40.

Two cylindrical pressure vessels or gas chambers 2 and 2' are mounted on the housing 3. They are adapted to receive a gas under pressure PG. One of their opposite ends is closed by an end cap 20/20' which is equipped with a plug 23/23'.

The wall 210/210' of their second end has an aperture 21/21' which is normally closed by a foil 22/22' fixed on wall 210/210', at the outside of the vessel. This foil is intended to break when a predetermined pressure is reached in housing 3.

When this foil is open, the aperture 21/21' gives communication between pressure vessels 2/2' and housing 3.

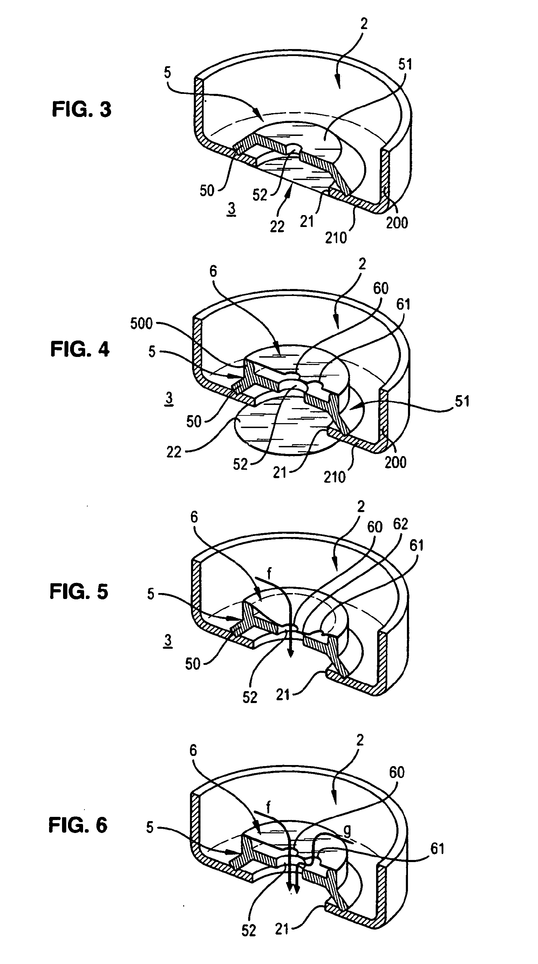

In the inside of each vessel 2/2' (see fig 3) is mounted a nozzle 5, which is made of a closed tapered wall 50 whose top is equipped with a partition 51 with a central opening 52, i.e. in register with aperture 21.

In said housing 3, just behind foils 22/22' is mounted an integrated support 34 made of two panels, each one in register with a foil. They are separated by a spacer 340 which is mounted on the top end of piston 33.

When the air-bag (not shown) connected to this inflator is to be deployed, an electric signal is forwarded to the igniter 30 and a pyrotechnic charge within said igniter is ignited, generating hot gases.

The gases will cause the piston 33 to move, together with spacer 340. Consequently, the two panels of support 34 swivel inside housing 3.

Then, foils 22/22' are no longer supported and break, so that the gas contained in vessels 2/2' can escape.

The flows go through said opening 52 of said nozzle 5, which acts as a defector and a flow controller.

The gases enter into housing 3 and escape through diffuser 4.

Despite said nozzle 5, the aggressiveness level of such an inflator is high.

According to the invention, each vessel 2/2' contains means for increasing the output flow of pressurized gas through said aperture 21/21' while the delta pressure between the inside of said vessel 2/2' and said housing 3 decreases.

Thanks to this feature, the aggressiveness of the inflator is greatly reduced. Said means will be described below.

Turning now to figure 4, a part of pressure vessel 2 is visible. The same comments apply to vessel 2'.

The end of cylindrical wall 200 of said vessel is closed by a flat wall 210 which constitutes a separation between the vessel 2 and housing 3.

To this inside face of this wall 210 is welded a nozzle 5.

This nozzle is made of a closed and tapered wall 50 which surrounds aperture 21 of wall 210. The top end of said tapered wall 50 has a cylindrical extension 500.

Said wall 50 and extension 500 are separated by a partition 51, which is integral with said nozzle.

Partition 51 has a central opening 52 which is in register with aperture 21 of wall 210.

On the top end of extension 500 is fixed a membrane 6 which is deformable. Preferentially, this membrane is elastic.

Examples of materials for this membrane 6 are stainless steel, Inconel (Trade Mark) (i.e. alloy steel/nickel).

As shown on figure 4, said membrane 6 has two orifices, one 60 in register with opening 52 and aperture 21, and another which is offset from said opening and aperture.

Consequently, and as visible on figures 5 and 6, when the foil 22 opens, the pressure in vessel 2 is higher than the down stream side of the nozzle 5 (i.e. the side turned in direction of housing 3). Consequently the delta pressure added to forces of the escaping gases are enough to override the spring force of the membrane 6 (see figure 5).

Thus, the membrane bends until it comes into contact with the nozzle partition 51. And so, gases are restricted to flow through the central orifice 60 of the membrane 6 which is dimensioned to meet the acceptable aggressiveness level for the first milliseconds (see arrow f of figure 5).

During the pressure vessel discharge, the pressure decreases and forces are not still enough to override the membrane's spring force. So the spring membrane 6 is released and gases are allowed to pass also by the second orifice 61 (see figure 6, arrows f and g). In this way, the flow output is increased and a higher gas flow is obtained.

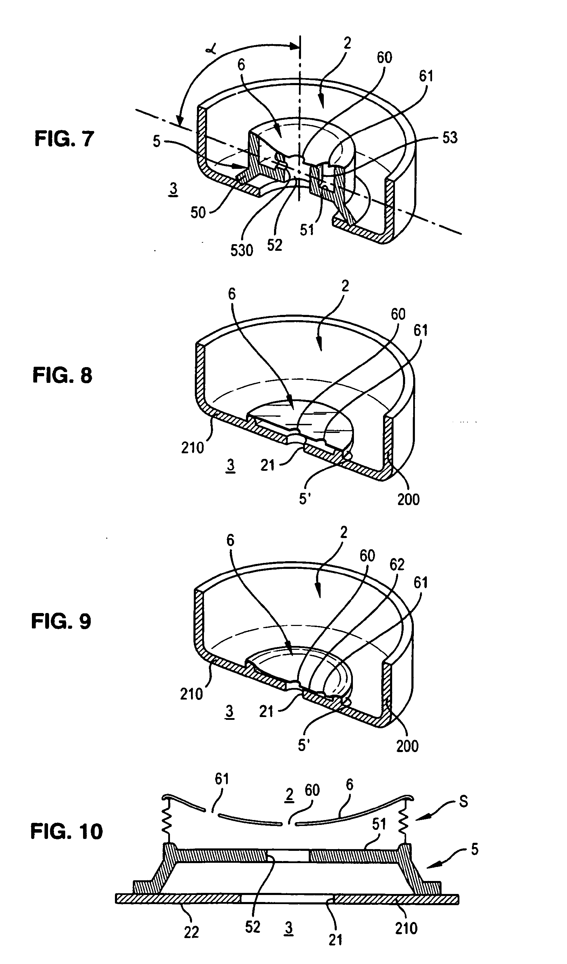

The structure shown on figure 7 is quite similar to the one depicted on figure 4.

Nevertheless, opening 52 is surrounded by an additional wall 53. Its height is less than the height of extension 500 of wall 50.

A radial channel 530 crosses said wall 53. The angle α between this channel 530 and the axle of opening 52 is 90°.

The reduced cross section from the pressure vessel 2 to the housing 3 creates a ventury effect and depressurizes the volume between the membrane 6 and the nozzle 5. The more the flow in the central orifice 61 of the nozzle 5 is higher, the more the volume between the membrane 6 and the nozzle 5 is depressurized.

Thus, for a given flow level, the membrane 6 is sucked and gases are restricted to flow through the central hole 60 of the membrane 6.

The structure shown on figures 8 and 9 does not comprise a nozzle.

In this case, instead of such a flow control nozzle, wall 210 of pressure vessel 2 is equipped of an annular closed wall or ledge 5' which surrounds aperture 21.

As depicted on these figures, wall 5' is integral with wall 210. Nevertheless, in a not shown embodiment, said wall can have the shape of a ring which is fixed to said vessel.

A membrane 6, with two orifices 60 and 61, is fitted with the top of wall 5'.

This structure works just like as explained with reference to figures 5 and 6.

For an improved functioning, a second ledge (not shown) can be added around aperture 21.

In the embodiment of figure 10, nozzle 5 is equipped with an already non or low deformable membrane 6.

Non or low deformable characteristic is link with membrane thickness and not necessary with material itself. Preferred materials could be the same than in the first embodiment.

In a not shown solution, only a part of membrane can be already bent, i.e. the area where orifices 60 and 61 are present.

Said membrane or disc 6 is mounted on a deformable support 5 located at the top of nozzle 5.

Deformable support acts as a spring. It can be made of a bending component or of a component which has a great elasticity behaviour.

An example of convenient materials is spring steel

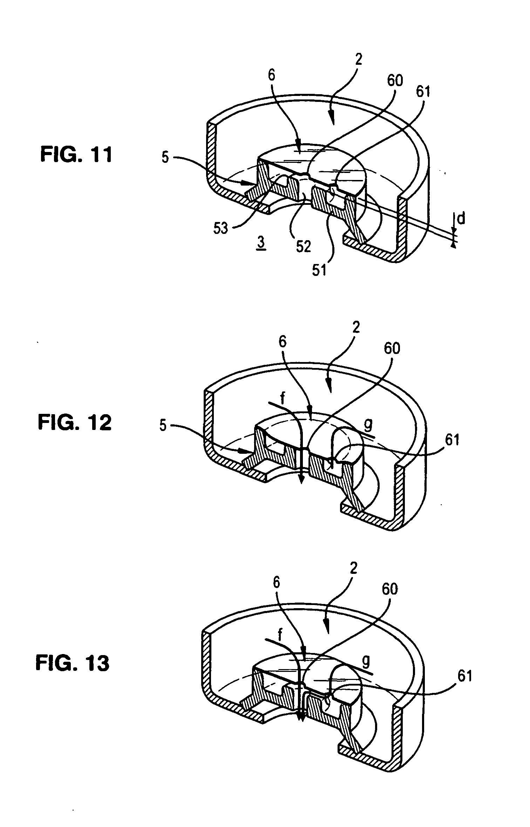

The embodiment of figures 11 to 13 is quite similar to the one of figure 7. Nevertheless, wall 53 is free of channel.

With this circular wall or ledge 53 around the nozzle's central opening 52, the cavity between the membrane 6 and the nozzle 5 is large (see the delta height d on figure 11).

Consequently, the trapped volume of gas is kept under pressure, that helps the membrane not to be over bended, and so protect it from permanent deformation.

Wall 53 also allows membrane to be in contact with a flat surface (i.e. the top surface of wall 53 acts as a seat for the membrane) and be able to flow between the membrane 6 and wall 53.

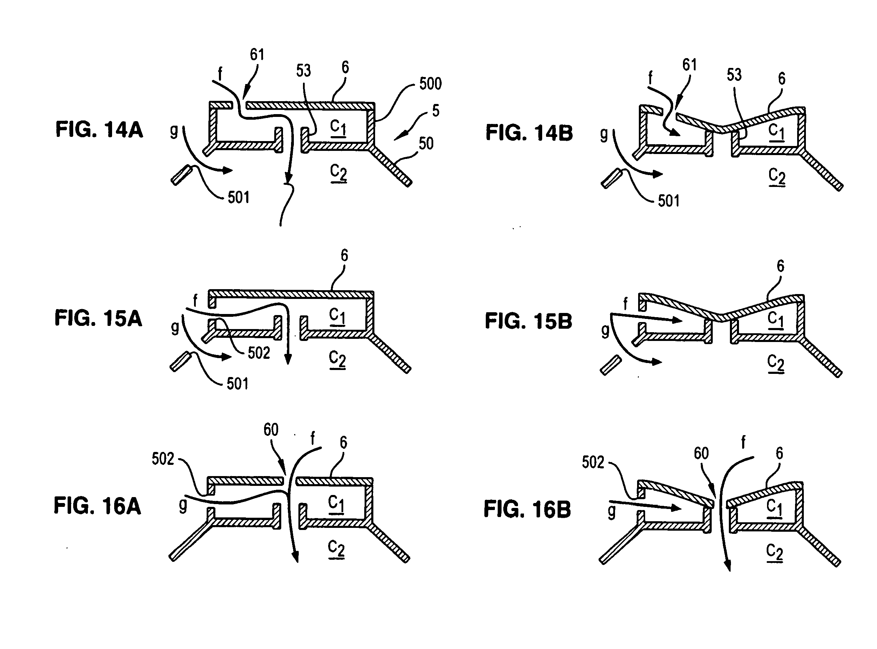

On figures 14A to figure 16B are depicted three additional configurations which work using the functioning principle described with reference to figures 11 to 13.

Figures 14A, 15A and 16A show the non restricted flow of gases, i.e. the situation where membrane 6 is not in contact with nozzle 5, while figures 14B, 15B and 16B show the restricted flow of gases, i.e. the situation where membrane is in contact with nozzle 5.

On figures 14A and 14B, membrane 6 has only one orifice 61 which is offset from opening 52. In other words, said orifice 61 is in register with partition 51 which separates nozzle 5 in two different chambers C₁ and C₂.

Additionally, the tapered wall 50 of nozzle 5 has a hole 501 which gives communication between pressure vessel 2 and chamber C₂.

Consequently, when in the unbended position (figure 14A), gases go through opening 61 and hole 501 (arrows f and g). When in the bended position (figure 14B), gases go through hole 501 only, and chamber C1 acts as a cul-de-sac (arrow f).

In the embodiment of figures 15A and 15B, the membrane 6 has no opening. But nozzle 5 has two holes 501 and 502, one 502 which gives communication between pressure vessel 2 and chamber C₁, and the second 501 which gives communication between pressure vessel 2 and chamber C₂.

In the embodiment of figures 16A and 16B, the membrane 6 has a central orifice 60 in register with the central opening of nozzle 5.

Additionally, the upper part of said nozzle has a hole which gives communication between pressure vessel 2 and chamber C₁.

The present invention can be used in an hybrid inflator. Hybrid inflator is known by itself. In this case, the inflator comprises a pressure vessel including the features of the present invention and a combustion chamber.

But the present invention can also be used in a gas combusting inflator. An example of such a combusting inflator is described in GB2417066. In this case, the inflator comprises two pressure vessels, each including the features of the present invention.

## Claims

1. An inflator (1) for an air-bag, which comprises at least one pressure vessel (2, 2') containing pressurised gas (PG), mounted on a housing (3) which receives gas from said vessel (2, 2') and direct it to the air-bag to be inflated, via an aperture (21) formed in a wall (210) of said vessel (2, 2'), this aperture (21) being closed by a foil (22) fixed on the wall (210), at the outside of the vessel (2, 2'), which breaks when a predetermined pressure is reached in said housing (3), where by
said vessel (2, 2') contains means (5, 6) for increasing the output flow of pressurized gas (PG) through said aperture (21) while the delta pressure between the inside of said vessel (2, 2') and said housing (3) decreases, **characterized in that** said (5, 6) means includes a membrane (6) which faces said aperture (21), and which can move under a variation of said delta pressure, so as to move between a first position in which it extends far from said aperture (21) and a second position in which it extends in the vicinity of said aperture (21), and vice versa.

2. An inflator according to claim 1, **characterized in that** the inside space of said vessel (2, 2') presents at least two orifices (60, 61 ; 530 ; 501, 502), the circulation of the gas from said vessel (2, 2') to said aperture (21) being possible through these openings when the membrane (6) is in said first position, and through one of them when the membrane (6) in said second position.

3. An inflator according to claim 2, **characterized in that** said membrane (6) is a deformable membrane.

4. An inflator according to claim 3, **characterized in that** said membrane (6) is an elastic membrane.

5. An inflator according to claim 1 or 2, **characterized in that** said membrane (6) is a non or low deformable membrane mounted on an deformable support (S).

6. An inflator according to any one of the preceding claims, **characterized in that** said membrane (6) is fixed at the top of a closed wall (5 ; 50) which surrounds said aperture (21).

7. An inflator according to claim 6, **characterized in that** said wall (50) is integral with said vessel (2, 2').

8. An inflator according to claim 6, **characterized in that** said closed wall (50) is a part of a nozzle (5) fixed said vessel (2) and surrounding said aperture (21).

9. An inflator according to claim 8, **characterized in that** said nozzle (5) comprises a partition (51) surrounded by said wall (50), which separates the nozzle in two chambers, i.e. a first chamber (C1) between said membrane (6) and said partition (51), and a second chamber (C2) between said partition (51) and said aperture (21), and **in that** said partition (51) includes an opening (52) that faces said aperture (21).

10. An inflator according to claim 9, **characterized in that** said partition (51) includes an additional wall (53) which surrounds said opening (52), whose height is less than the height of said closed wall (50), and acts as a seat for the membrane (6) when in the second position.

11. An inflator according to any one of claims 2 to 10, **characterized in that** said at least two orifices (60, 61) are present in said membrane (6), one (60) of them facing said aperture (21), and the second (62) offset from said aperture (21), and **in that** the total surface of said orifices (60, 61) is smaller or equal to the surface of said aperture (21).

12. An inflator according to any one of claims 9 and 10, **characterized in that** one (60) of said at least two orifices (60, 502) is present in said membrane (6), facing said aperture (21), and **in that** the second one (502) of said at least two orifices (60, 502) is a hole in the closed wall (50) of said nozzle (5), in register with said first chamber (C1).

13. An inflator according to any one of claims 9 and 10, **characterized in that** one (61) of said at least two orifices (60, 501) is present in said membrane (6), offset from said aperture (21), and **in that** the second one (501) of said at least two orifices (60, 501) is a hole in the closed wall (50) of said nozzle (5), in register with said second chamber (C2).

14. An Inflator according to any one of claims 9 and 10, **characterized in that** said membrane (6) is free of orifices, and **in that** said first (502) and second (501) of said at least two orifices are holes in the closed wall (50) of said nozzle (5), one in register with said first chamber (C1), and the other in register with said second chamber (C2).

## Patentansprüche

1. Gasgenerator (1) für einen Airbag, der mindestens ein Druckgas (PG) enthaltendes Druckgefäß (2, 2') umfasst, das an einem Gehäuse (3) montiert ist, das Gas aus dem Gefäß (2, 2') aufnimmt und über ein Loch (21), das in einer Wand (210) des Gefäßes (2, 2') ausgebildet ist, zu dem aufzublasenden Airbag leitet, wobei dieses Loch (21) mit einer Folie (22) verschlossen ist, die an der Wand (210), an der Außenseite des Gefäßes (2, 2'), befestigt ist und zerreißt, wenn ein festgelegter Druck in dem Gehäuse (3) erreicht wird, wodurch
das Gefäß (2, 2') ein Mittel (5, 6) zur Erhöhung der Ausgangsmenge von Druckgas (PG) durch das Loch (21) enthält, während der Druckunterschied zwischen der Innenseite des Gefäßes (2, 2') und dem Gehäuse (3) abnimmt, **dadurch gekennzeichnet, dass** das Mittel (5, 6) eine Membran (6) aufweist, die dem Loch (21) zugewandt ist und die sich bei Veränderung des Druckunterschieds bewegen kann, sodass sie sich zwischen einer ersten Position, in der sie weit von dem Loch (21) entfernt verläuft, und einer zweiten Position, in der sie in der Nähe des Lochs (21) verläuft, und umgekehrt bewegt.

2. Gasgenerator nach Anspruch 1, **dadurch gekennzeichnet, dass** der Innenraum des Gefäßes (2, 2') mindestens zwei Öffnungen (60, 61; 530; 501, 502) aufweist, wobei die Zirkulation des Gases aus dem Gefäß (2, 2') zu dem Loch (21) durch diese Öffnungen möglich ist, wenn sich die Membran (6) in der ersten Position befindet, und durch eine davon, wenn sich die Membran (6) in der zweiten Position befindet.

3. Gasgenerator nach Anspruch 2, **dadurch gekennzeichnet, dass** die Membran (6) eine verformbare Membran ist.

4. Gasgenerator nach Anspruch 3, **dadurch gekennzeichnet, dass** die Membran (6) eine elastische Membran ist.

5. Gasgenerator nach Anspruch 1 oder 2, **dadurch gekennzeichnet, dass** die Membran (6) eine nicht oder wenig verformbare Membran ist, die auf einem verformbaren Träger (S) montiert ist.

6. Gasgenerator nach einem der vorhergehenden Ansprüche, **dadurch gekennzeichnet, dass** die Membran (6) oben an einer geschlossenen Wand (5; 50) befestigt ist, die das Loch (21) umgibt.

7. Gasgenerator nach Anspruch 6, **dadurch gekennzeichnet, dass** die Wand (50) eine Einheit mit dem Gefäß (2, 2') bildet.

8. Gasgenerator nach Anspruch 6, **dadurch gekennzeichnet, dass** die geschlossene Wand (50) Teil einer Düse (5) ist, die an dem Gefäß (2) befestigt ist und das Loch (21) umgibt.

9. Gasgenerator nach Anspruch 8, **dadurch gekennzeichnet, dass** die Düse (5) eine von der Wand (50) umgebene Trennwand (51) umfasst, die die Düse in zwei Kammern unterteilt, d.h. eine erste Kammer (C1) zwischen der Membran (6) und der Trennwand (51) und eine zweite Kammer (C2) zwischen der Trennwand (51) und dem Loch (21), und dadurch, dass die Trennwand (51) eine Öffnung (52) aufweist, die dem Loch (21) zugewandt ist.

10. Gasgenerator nach Anspruch 9, **dadurch gekennzeichnet, dass** die Trennwand (51) eine zusätzliche Wand (53) aufweist, die die Öffnung (52) umgibt, deren Höhe niedriger ist als die Höhe der geschlossenen Wand (50) und als Auflage für die Membran (6) dient, wenn sie sich in der zweiten Position befindet.

11. Gasgenerator nach einem der Ansprüche 2 bis 10, **dadurch gekennzeichnet, dass** die mindestens zwei Öffnungen (60, 61) in der Membran (6) vorhanden sind, wobei eine (60) von ihnen dem Loch (21) zugewandt ist, und die zweite (62) zu dem Loch (21) versetzt ist, und dadurch, dass die Gesamtfläche der Öffnungen (60, 61) kleiner ist als die Fläche des Lochs (21) oder ihr entspricht.

12. Gasgenerator nach einem der Ansprüche 9 und 10, **dadurch gekennzeichnet, dass** sich eine (60) der mindestens zwei Öffnungen (60, 502) in der Membran (6) befindet und dem Loch (21) zugewandt ist, und dadurch, dass die zweite (502) der mindestens zwei Öffnungen (60, 502) eine sich mit der ersten Kammer (C1) deckende Bohrung in der geschlossenen Wand (50) der Düse (5) ist.

13. Gasgenerator nach einem der Ansprüche 9 und 10, **dadurch gekennzeichnet, dass** sich eine (61) der mindestens zwei Öffnungen (60, 501) in der Membran (6) befindet und zu dem Loch (21) versetzt ist, und dadurch, dass die zweite (501) der mindestens zwei Öffnungen (60, 501) eine sich mit der zweiten Kammer (C2) deckende Bohrung in der geschlossenen Wand (50) der Düse (5) ist.

14. Gasgenerator nach einem der Ansprüche 9 und 10, **dadurch gekennzeichnet, dass** die Membran (6) keine Öffnungen aufweist, und dadurch, dass die erste (502) und zweite (501) der mindestens zwei Öffnungen Bohrungen in der geschlossenen Wand (50) der Düse (5) sind, eine in Deckung mit der ersten Kammer (C1) und die andere in Deckung mit der zweiten Kammer (C2).

## Revendications

1. Gonfleur (1) pour un airbag, qui comprend au moins une cuve sous pression (2, 2') contenant du gaz sous pression (PG), montée sur un boîtier (3) qui reçoit du gaz de ladite cuve (2, 2') et le conduit vers l'airbag destiné à être gonflé, via une ouverture (21) formée dans une paroi (210) de ladite cuve (2, 2'), cette ouverture (21) étant fermée par une feuille (22) fixée sur la paroi (210), à l'extérieur de la cuve (2, 2'), qui rompt quand une pression prédéterminée est atteinte dans ledit boîtier (3), ce par quoi
ladite cuve (2, 2') contient des moyens (5, 6) pour augmenter l'écoulement de sortie de gaz sous pression (PG) à travers ladite ouverture (21) tandis que la pression différentielle entre l'intérieur de ladite cuve (2, 2') et ledit boîtier (3) diminue, **caractérisé en ce que** ledit (5, 6) moyen comprend une membrane (6) qui fait face à ladite ouverture (21), et qui peut se déplacer lors d'une variation de ladite pression différentielle, de façon à se déplacer entre une première position dans laquelle elle s'étend loin de ladite ouverture (21) et une seconde position dans laquelle elle s'étend à proximité de ladite ouverture (21), et vice versa.

2. Gonfleur selon la revendication 1, **caractérisé en ce que** l'espace intérieur de ladite cuve (2, 2') présente au moins deux orifices (60, 61 ; 530 ; 501, 502), la circulation du gaz de ladite cuve (2, 2') à ladite ouverture (21) étant possible à travers ces ouvertures quand la membrane (6) est dans ladite première position, et à travers l'un d'eux quand la membrane (6) est dans ladite seconde position.

3. Gonfleur selon la revendication 2, **caractérisé en ce que** ladite membrane (6) est une membrane déformable.

4. Gonfleur selon la revendication 3, **caractérisé en ce que** ladite membrane (6) est une membrane élastique.

5. Gonfleur selon la revendication 1 ou 2, **caractérisé en ce que** ladite membrane (6) est une membrane peu ou pas déformable montée sur un support déformable (S).

6. Gonfleur selon l'une quelconque des revendications précédentes, **caractérisé en ce que** ladite membrane (6) est fixée en haut d'une paroi fermée (5 ; 50) qui entoure ladite ouverture (21).

7. Gonfleur selon la revendication 6, **caractérisé en ce que** ladite paroi (50) fait partie intégrante de ladite cuve (2, 2').

8. Gonfleur selon la revendication 6, **caractérisé en ce que** ladite paroi fermée (50) fait partie d'une tubulure (5) fixée à ladite cuve (2) et entourant ladite ouverture (21).

9. Gonfleur selon la revendication 8, **caractérisé en ce que** ladite tubulure (5) comprend une cloison (51) entourée par ladite paroi (50), qui sépare la tubulure en deux chambres, c.-à-d. une première chambre (C1) entre ladite membrane (6) et ladite cloison (51), et une seconde chambre (C2) entre ladite cloison (51) et ladite ouverture (21), et **en ce que** ladite cloison (51) comporte une ouverture (52) qui fait face à ladite ouverture (21).

10. Gonfleur selon la revendication 9, **caractérisé en ce que** ladite cloison (51) comporte une paroi supplémentaire (53) qui entoure ladite ouverture (52), dont la hauteur est inférieure à la hauteur de ladite paroi fermée (50), et agit en tant que siège pour la membrane (6) quand elle est dans la seconde position.

11. Gonfleur selon l'une quelconque des revendications 2 à 10, **caractérisé en ce que** lesdits au moins deux orifices (60, 61) sont présents dans ladite membrane (6), l'un (60) d'eux faisant face à ladite ouverture (21), et le second (62) décalé par rapport à ladite ouverture (21), et **en ce que** la surface totale desdits orifices (60, 61) est inférieure ou égale à la surface de ladite ouverture (21).

12. Gonfleur selon l'une quelconque des revendications 9 et 10, **caractérisé en ce que** l'un (60) desdits au moins deux orifices (60, 502) est présent dans ladite membrane (6), faisant face à ladite ouverture (21), et **en ce que** le second (502) desdits au moins deux orifices (60, 502) est un trou dans la paroi fermée (50) de ladite tubulure (5), en correspondance exacte avec ladite première chambre (C1).

13. Gonfleur selon l'une quelconque des revendications 9 et 10, **caractérisé en ce que** l'un (61) desdits au moins deux orifices (60, 501) est présent dans ladite membrane (6), décalé par rapport à ladite ouverture (21), et **en ce que** le second (501) desdits au moins deux orifices (60, 501) est un trou dans la paroi fermée (50) de ladite tubulure (5), en correspondance exacte avec ladite seconde chambre (C2).

14. Gonfleur selon l'une quelconque des revendications 9 et 10, **caractérisé en ce que** ladite membrane (6) est exempte d'orifices, et **en ce que** lesdits premier (502) et second (501) desdits au moins deux orifices sont des trous dans la paroi fermée (50) de ladite tubulure (5), l'un en correspondance exacte avec ladite première chambre (C1), et l'autre en correspondance exacte avec ladite seconde chambre (C2).
